# EUROPEAN PATENT APPLICATION

(11) **EP 1 550 810 A1**
(43) Date of publication of application: **06.07.2005**
(21) Application number: 03748583.6
(22) Date of filing: 25.09.2003
(51) Int. Cl.: F04C 18/344

(54) **VANE ROTARY TYPE AIR PUMP**

(30) Priority: 26.09.2002 JP 2002280997; 26.09.2002 JP 2002280998
(71) Applicant: MATSUSHITA ELECTRIC INDUSTRIAL CO., LTD., Kadoma-shi, Osaka 571-8501 (JP)
(72) Inventor: SAWAI, Kiyoshi, Otsu-shi, Shiga 520-2101 (JP); SAKUDA, Atsushi, Ritto-shi, Shiga 520-3024 (JP); NAKAMOTO, Tatsuya, Kusatsu-shi, Shiga 525-0058 (JP)
(74) Representative: Grünecker, Kinkeldey, Stockmair & Schwanhäusser
(86) International application number: PCT/JP2003/012242
(87) International publication number: WO 2004/029462

(57) **Abstract**

The invention has an object to enable oilless operation that is indispensable for a pump used to supply air to a fuel battery, to enable easy and accurate alignment between the axes of a pump mechanism and a motor, and to reduce the size of the whole pump. Used in the invention are a plate-like vane (109) made of a material having a self-lubrication property, and a front plate (111) and a rear plate (112) having a self-lubrication material on the respective slide surfaces, and a mechanical shaft (110) of the pump mechanism (102) is integrated with a motor shaft of a DC motor.

## Description

### TECHNICAL FIELD

The present invention relates to a configuration of a vane rotary type air pump used as an air supply unit for a mobile notebook-sized personal computer using a fuel battery.

### BACKGROUND ART

Fuel batteries for use in mobile environment are now under development; however, an air pump that is suitable for supplying air to cells of fuel batteries is not available. Such kind of air pump is demanded to have the following characteristics: supplied air does not contain impurities such as oil, that is, the air pump employs oilless mechanism; in order to supply air while overcoming the pressure loss occurring in the air flow path of the fuel battery system, the pressure at which air is supplied should be Δp = 2 to 5 kPa, although the supplied amount of air is about 10 litters/min and hence the required flow amount is relatively small; because of the necessity to incorporate in a mobile apparatus, the size is equal to or less than 30 mm in diameter; and the noise level is low. We invented a vane rotary type air pump satisfying these characteristics. First, description will be made on a conventional technique regarding a vane rotary type pump machine.

Conventionally, a typical vane rotary compressor of such type is configured as described in JP 2001-214875 A. Figs. 10 and 11 show a conventional vane rotary compressor described in this patent document. Fig. 11 is a sectional view taken along line I-I of Fig. 10. In Figs. 10 and 11, a columnar rotor 14 is disposed in a cylinder 13 having a cylindrical inner surface in the state where the central axis thereof is decentered by a predetermined amount from the central axis of the cylinder 13. The rotor 14 is provided with three grooves 16 radially deviated outward from the center thereof. In these grooves 16 are slidably fitted plate-like vanes 17, and a tip end of the vane 17 is adapted to be slidable on the inner surface of the cylinder 13. A front plate 11 and a rear plate 12 are disposed on end surfaces of the cylinder 13 so that they sandwich the rotor 14 and the vane 17. Accordingly, a compression space 18 consisting of a plurality of compartments is formed, surrounded by the cylinder 13, the rotor 14, the vanes 17, the front plate 11 and the rear plate 12. The cylinder 13 has a suction opening 19 and a discharge opening 20 in its periphery. The rotor 14 has a mechanical shaft 15 that transmits driving force. Behind the rear plate 12 is provided an oil supply casing 25 in which an oil sump 26 is formed. Also the oil supply casing 25 accommodates an oil control valve unit 29 that supplies a lubricant oil in the oil sump 26 to the grooves 16 of the rotor 14 via an oil supply path 28 formed in the rear plate 12.

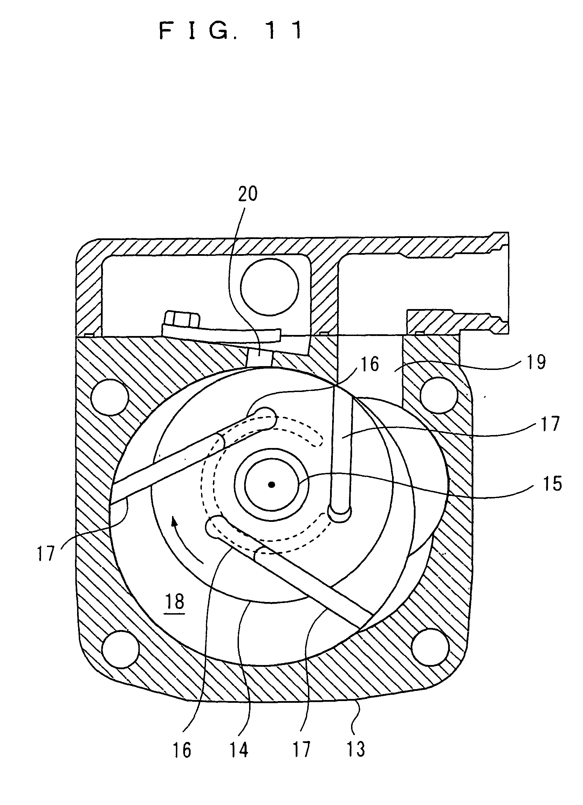

Upon transmission of power from an engine or a motor (not shown) to the mechanical shaft 15 via a belt (not shown), the rotor 14 rotates clockwise in Fig. 11, and a refrigerant gas having returned from a refrigeration circle is sucked into the compression space 18 in the cylinder 13 via the suction opening 19 and is compressed. The compressed high-pressure gas is then discharged via the discharge opening 20 and enters the oil supply casing 25. In this oil supply casing 25, the lubricant oil is separated and only the refrigerant gas is fed to the refrigeration cycle. The lubricant oil thus separated is temporarily stored in the oil sump 26 and, then, is supplied to the grooves 16 of the rotor 14 via the oil supply path 28 from the oil control valve unit 29. As a result of this, a back-pressure is applied on the vane 17 by the pressure of the lubricant oil, whereby the vane 17 slides on the inner surface of the cylinder 13.

Figs. 12 and 13 show another conventional vane rotary type pump described in JP 2001-221180 A. This another vane rotary type pump has a cylinder 13 having a cylindrical inner wall which is closed at both ends by a front plate 11 and a rear plate 12. Within the cylinder 13 is disposed a rotor 14. A part of outer circumference of the rotor 14 forms a small space with the inner wall of the cylinder 13. A mechanical shaft 15 formed integrally with the rotor 14 is axially supported at its both ends by the front plate 11 and the rear plate 12 in a rotatable manner. On the periphery of the rotor 14, a plurality of grooves 16 are formed, and one end of a vane 17 is slidably inserted in each groove 16. The vanes 17 form a pump space 18 together with the cylinder 13, the rotor 14, the front plate 11 and the rear plate 12. The cylinder 13 is formed with a suction opening 19 that communicates with the pump space 18 on suction side and a discharge opening 20 that communicates with the pump space 18 on compression side.

When power is transmitted to the mechanical shaft 15, the rotor 14 rotates, and the fluid sucked via the suction opening 19 is sucked into the pump space 18 on suction side and is compressed. The fluid thus compressed is then discharged from the pump space 18 on compression side via the discharge opening 20 of the cylinder 13.

In the conventional configuration as described above, a small amount of lubricant oil that has been supplied to the backside of the vane 17 enters the compression space 18 through the gap between the groove 16 and the vane 17, and this lubricant oil is responsible for lubrication between the vane 17 and the rotor 14 and lubrication between the rotor 14, and the front plate 11 and the rear plate 12. However, this configuration has a problem of difficulty in conducting oilless operation that is indispensable for a pump used for supplying air to a fuel battery.

In the above conventional configuration, an engine or a motor shaft drives the mechanical shaft 15 that is integrated with the rotor 14 via a belt. When an attempt is made to arrange a motor coaxially and drive the mechanical shaft 15 by the motor shaft for improving the above configuration, a problem of difficulty in registering the axial centers of these two shafts with accuracy arises. When an attempt is made to couple the two shafts by a flexible joint or a coupling component, a problem arises that the whole size increases. Coupling the two shafts by a coupling component or the like also has a problem that a small deviation makes oscillation or becomes distortion to cause energy loss and decrease in transmission efficiency.

Furthermore, in the above conventional configuration, since the cylinder 13 is provided with the suction opening 19 and the discharge opening 20 in its outer periphery, the outer diameter of the whole compressor becomes large.

Furthermore, suction achieved via the front plate 11 exclusively makes the time for suction process shorter when a pump mechanism part operates at high speed, so that the suction efficiency is impaired.

### DISCLOSURE OF THE INVENTION

The present invention solves the conventional problems as described above, and it is an object of the present invention to provide a vane rotary type air pump that enables oilless operation, allows direct connection between a pump mechanism part and a motor, and has a small outer diameter of the whole pump.

The present invention is made to solve the conventional problems as described above, and it is another object of the invention to provide a vane rotary type air pump that can be driven by a DC motor while suppressing deterioration of transmission efficiency.

It is still another object of the present invention to provide a vane rotary type air pump in which heights in the axial and radial directions of the cylinder are reduced by providing a plate between the rear plate and the motor, fastening the pump mechanism part and the motor, and providing a suction port and a discharge port in the front plate.

It is yet another object of the present invention to provide a vane rotary type air pump in which suction loss of fluid at the time of high speed rotation of pump mechanism part is reduced and decrease in suction amount is avoided by providing a fluid inflow path having a structure that produces less suction loss.

In order to solve the aforementioned problems, the present invention provides a vane rotary type air pump comprising a pump mechanism of vane rotary type using an inner slide surface made of a material having a self-lubrication property, and a motor for driving the pump mechanism, in which the a mechanical shaft of the pump mechanism and a motor shaft of the motor are integrally formed.

As described above, since the mechanical shaft of the pump mechanism and the motor shaft of the motor are integrally formed, it is possible to readily align axial centers of the pump mechanism part and the motor part, and it is possible to assemble the whole pump with high accuracy and simplicity. Furthermore, since a joint part or the like is no longer necessary between the mechanical shaft and the motor shaft, downsizing is possible.

Furthermore, in order to solve the aforementionedproblems, the present invention is configured as follows. In a cylinder having a cylindrical inner surface, a columnar rotor is disposed in the state where a central axis is decentered from a central axis of a cylinder space of the cylinder by a predetermined amount; the rotor has a plurality of grooves in the direction of the central axis; a plate-like vane made of a material having a self-lubrication property is slidably fitted into the groove; a front plate and a rear plate having a self-lubrication material on its slide surface are disposed on end surfaces of the cylinder in such a manner that they sandwich the rotor and the vane to form a pump spaces consisting of a plurality of compartments; a mechanical shaft is provided in the central axis of the rotor to form a pump mechanism part; a DC motor is disposed adjacent to the pump mechanism part via the rear plate; an oilless air pump is structured in which the volume of pump space changes with the rotational movement of the vane caused by the DC motor driving the mechanical shaft; and the mechanical shaft and the motor shaft of the DC motor are integrally formed.

Since the vane is made of a material having a self-lubrication property and slidably fitted into the groove of the rotor, while the front plate and the rear plate having a self-lubrication material on their slide surfaces are disposed on the end surfaces of the cylinder so as to sandwich the rotor and the vane, the friction loss and abrasion are reduced in the sliding face, which enables oilless operation. Furthermore, since the mechanical shaft and the motor shaft of the DC motor are integrally formed, it is possible to readily align the axial centers of the pump mechanism part and the motor part. This enables accurate and simple assembly of the whole pump. Furthermore, since a joint part or the like is no longer necessary between the mechanical shaft and the motor shaft, downsizing is possible.

In order to solve the above problems, in the present invention, the rotor is provided with two grooves that are offset from its central axis, and the front plate is provided with a suction opening and a discharge opening to configure the pump mechanism part, and the DC motor is implemented by a brushless motor.

By forming grooves offset from the central axis of the rotor and fitting vanes into these two grooves, it is possible to reduce the diameter of the rotor and thus the diameter of the pump mechanism part. Furthermore, by providing the front plate with the suction opening and the discharge opening, it is possible to reduce the outer diameter of the pump mechanism part to equal to or less than 30 mm in diameter. Accordingly, it is possible to reduce the size to such an extent that is applicable to a fuel buttery for a mobile apparatus.

In order to solve the above problems, in the present invention, outer circumference of the cylindrical surface of the pump mechanism part and outer circumference of the DC motor have almost the same diameter and form a single cylinder as a whole.

Since the air pump is configured by a single cylindrical shape, it can be mounted in a hinge part of a personal computer.

In order to solve the above problems, in the present invention, the vane is made of a carbon composite material; the rotor is formed using aluminum alloy or PEEK-based resin; the cylinder is formed using aluminum alloy containing nearly 10% of silicon; and surfaces of the front plate and the rear plate are coated with a self-lubrication material containing PTFE or molybdenum disulfide.

As described above, by forming the components of the respective materials, self-lubrication function in the sliding part is secured with accuracy and weight reduction is also possible.

In order to solve the above problems, in the present invention, the mechanical shaft and the motor shaft of the DC motor are joined via the rotor. According to this invention, it is possible to connect the motor shaft of the DC motor and the rotor while suppressing reduction of transmission efficiency.

Furthermore, in order to solve the above problems, in the present invention, the motor shaft is joined with rotor by press fitting or shrinkage fitting, or using an adhesive. According to this invention, it is possible to connect the motor shaft and the rotor while suppressing reduction of transmission efficiency without requirement of conducting anti-slipping treatment such as I cut on the motor shaft and the rotor.

Furthermore, in order to solve the above problems, in the present invention, a plate with spot facing is provided between the rear plate and the motor and is formed with bolt holes respectively having the pitch and same diameter corresponding to the pump mechanism part and the motor, and the pump mechanism part and the motor are fastened via the plate. According to this invention, it is possible to provide the pump mechanism part fastening hole as close as possible to the outer circumference of the pump mechanism part regardless of the pitch and diameter of the existent screw hole formed on the end surface of the casing of the DC motor, and to increase the inner diameter of the cylinder. Therefore, it is possible to shorten the cylinder in the axial direction, which facilitates downsizing of the pump mechanism part.

Furthermore, in order to solve the above problems, in the present invention, the front plate has a suction port, a discharge port and a discharge opening. According to this invention, the discharge path on the outer circumference of the cylinder is no longer necessary, so that it is possible to shorten the cylinder in the axial direction, which facilitates downsizing of the pump mechanism part.

Furthermore, in order to solve the above problems, in the present invention, there are provided a first suction path that guides outside air into the pump space from the suction port formed in the front plate, and a second suction path that guides outside air into the pump space via the suction port of the front plate while passing through a through hole which is provided in the cylinder and through a suction port formed in the rear plate so as to communicate with the through hole. According to this invention, suction is enabled not only from the front plate but also from the rear plate, so that it is possible to reduce the loss of suction pressure when the pump mechanism part rotates at high speed and suppress reduction in the suction loss.

Furthermore, in order to solve the above problems, in the present invention, there is provided a third suction path that guides outside air into the pump space via the suction port while passing through the through hole and a communication path which leads from the through hole to the pump space at the center part in the longitudinal direction of the through hole. According to this invention, suction from the center part in the longitudinal direction of the cylinder is also available, so that it is possible to further reduce the loss of suction pressure caused by increase in suction amount of fluid.

Furthermore, in order to solve the above problems, in the present invention, the front plate has a suction port and a recess-shaped discharge port so as to oppose to the pump space lying over the range from the rotation angle of rotor where the volume ratio exceeds about one to the rotation angle of rotor where a gap of about five times a minimum gap along the radial direction between the rotor and the cylinder is established. According to this invention, since the fluid in the pump space can be pushed by the vane in almost all regions of the suction part of the pump space, the suction loss is reduced, and reduction of suction amount can be avoided. Furthermore, since it is possible to prevent leakage to the suction part of the pump space through the minimum gap along the radial direction, the suction loss is reduced.

### BRIEF DESCRIPTION OF THE DRAWINGS

Fig. 1 is a transverse sectional view of a vane rotary type air pump according to Embodiment 1 of the present invention.
Fig. 2 is a longitudinal sectional view of the vane rotary type air pump according to Embodiment 1 of the present invention.
Fig. 3 is a plan view of a front plate of the vane rotary type air pump according to Embodiment 1 of the present invention.
Fig. 4 is a plan view of a rear plate of the vane rotary type air pump according to Embodiment 1 of the present invention.
Fig. 5 shows a vane rotary type air pump according to Embodiment 2 of the present invention in use state, incorporated into a personal computer.
Fig. 6 is a longitudinal sectional view of a vane rotary type air pump according to Embodiment 3 of the present invention.
Fig. 7 is a sectional view of a vane rotary type air pump.
Fig. 8 is a front view of a plate of the vane rotary type air pump shown in Fig. 7.
Fig. 9 is a front view of a front plate of the vane rotary type air pump shown in Fig. 7.

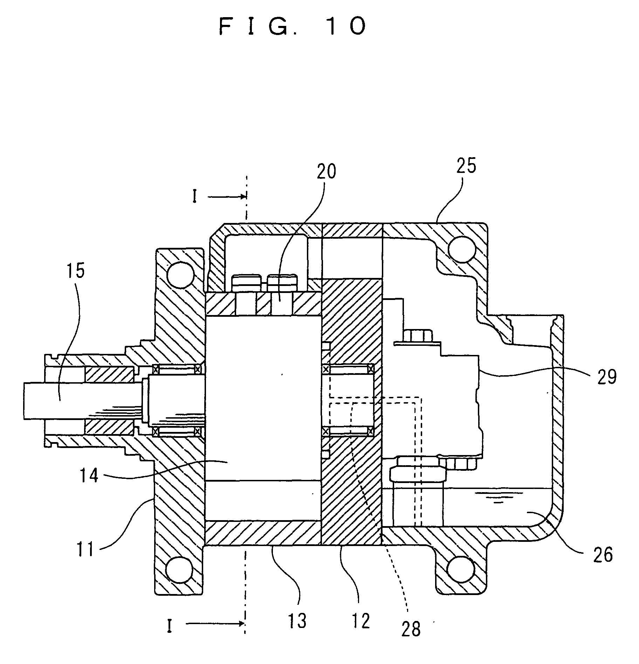

Fig. 10 is a longitudinal sectional view of a conventional vane rotary compressor seen from front side.
Fig. 11 is a longitudinal sectional view of a conventional vane rotary compressor seen from lateral side.

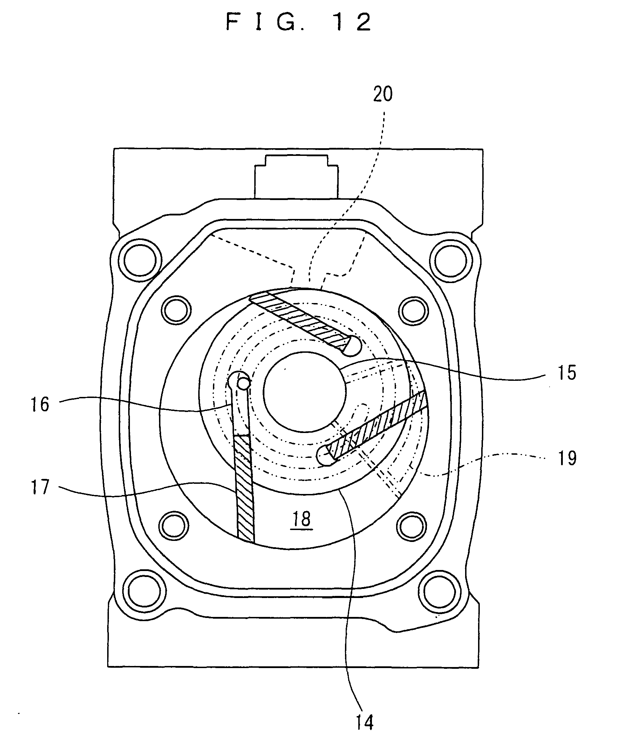

Fig. 12 is a longitudinal sectional view of another conventional vane rotary type pump.

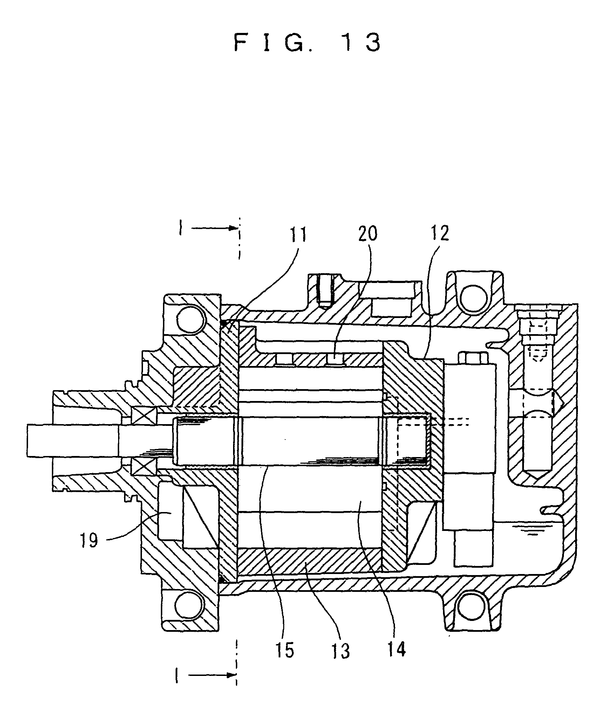

Fig. 13 is a sectional view of still another conventional vane rotary type pump.

### BEST MODE FOR CARRYING OUT THE INVENTION

In the following, preferred embodiments of the present invention will be described with reference to the drawings.

### (Embodiment 1)

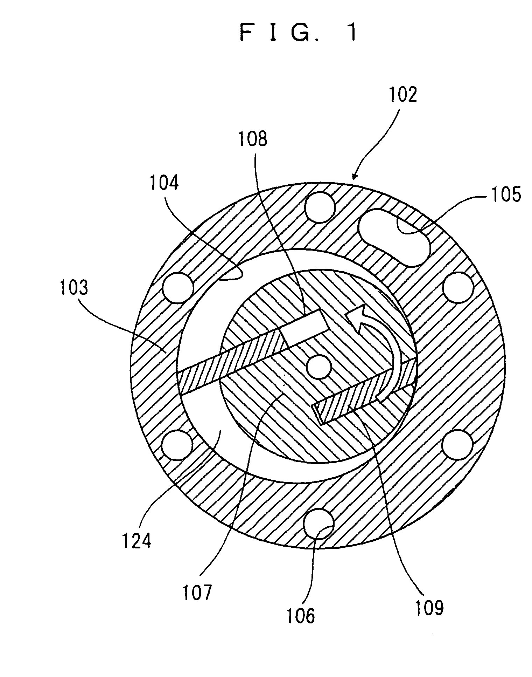

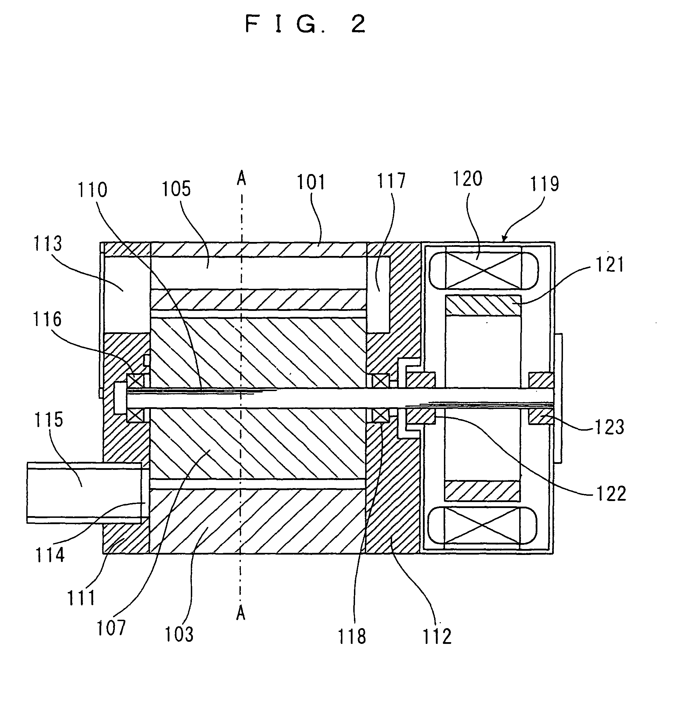

Fig. 1 is a transverse sectional view of a vane rotary type air pump according to Embodiment 1 of the present invention. Fig. 2 is a longitudinal sectional view of the vane rotary type air pump according to this embodiment. Fig. 1 is a sectional view taken along line A-A of Fig. 2. A main unit 101 of the vane rotary type air pump according to the present invention includes a pump mechanism part 102 and a DC motor 119.

First, the pump mechanism part 102 will be described. In the cylinder space within a cylinder 103 having a cylindrical inner surface 104, a cylindrical rotor 107 is disposed in the immediately vicinity of the inner surface 104 in the state where a central axis of a rotor 107 is decentered from the central axis of the cylinder space of the cylinder 103 by a predetermined amount. The rotor 107 is provided with two grooves 108 that extend toward the central axis but are offset from the central axis. Specifically, these grooves 108 are provided so as to be parallel with each other across the central axis and open in the opposite directions. Within these grooves 108 are slidably fitted plate-like vanes 109 made of a carbon composite material having a self-lubrication property, and a tip end of the vane 109 is adapted to slidably contact with the inner surface 104 of the cylinder 103.

In this embodiment, the rotor 107 is made of aluminum alloy so as to reduce the weight. Furthermore, aluminum alloy containing about 10% of silicon is used as a material for the cylinder 103.

Next, a front plate 111 and a rear plate 112 are disposed on both end surfaces of the cylinder 103 so as to sandwich the rotor 107 and the vane 109 from both sides. With this structure, a pump space 124 consisting of a plurality of compartments is formed, surrounded by the cylinder 103, the rotor 107, the vanes 109, the front plate 111 and the rear plate 112. That is, in the cylinder space within the cylindrical cylinder 103, the rotor 107 which is a column having a smaller diameter than the cylinder 103 is journaled by the front plate 111 and the rear plate 112 while being decentered in either side. Consequently, an open space of crescent shape is formed in the cylindrical cylinder 103. This crescent-shaped space is separated by the vanes 109 to form the plurality of compartments of pump space 124.

Inner surfaces of the front plate 111 and the rear plate 112 are coated with a self-lubrication material containing molybdenum disulfide.

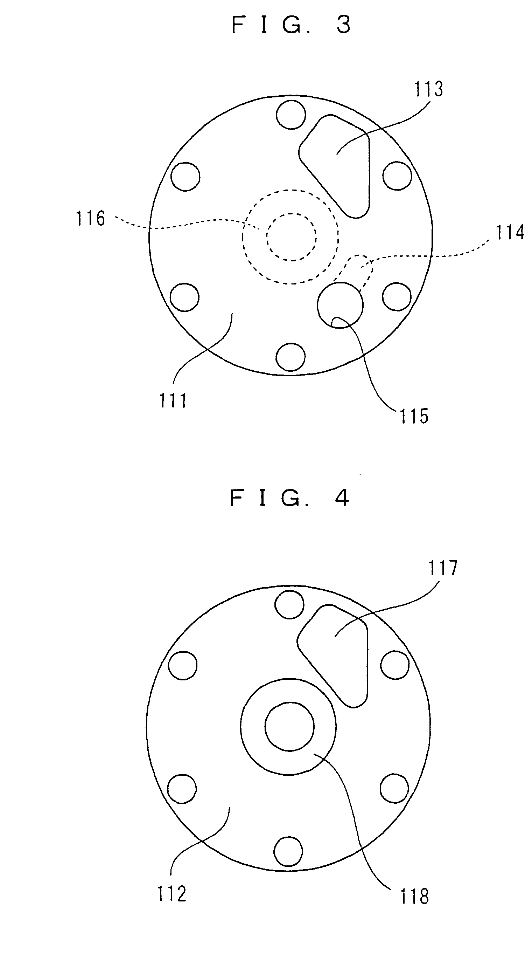

In addition, as shown in Figs. 3 and 4, the front plate 111 is provided with a suction port 113 and a discharge port 114, and a discharge opening 115 leading to the discharge port 114. The suction port 113 is a through hole of almost trapezoidal shape, while the discharge port 114 is a port formed by depressing the inner wall of the front plate 111 into a groove shape and is connected to the discharge opening 115.

On the other hand, in the part of rear plate 112 that opposes to the suction port 113, a suction port 117 having a depressed form similar to the suction port 113 is formed.

Next, the DC motor 119 will be described. On the surface of the rear plate 112 on the opposite side of the pump mechanism part 102, the DC motor 119 is disposed so as to directly contact with the rear plate 112. Therefore, the rear plate 112 also serves as a lid of one side of the casing of the DC motor 119. In this embodiment, a brushless motor is used as the DC motor 119. The DC motor 119 includes a cylindrical coil 120 and a rotor 121 equipped with a permanent magnet, and the rotor 121 has a long shaft 110. The shaft 110 serves as a shaft of the DC motor as well as a shaft of the rotor 107 of the pump mechanism part. In other words, while the shaft 110 is supported by motor bearings 122 and 123 inside the DC motor 119, it extends from the DC motor 119 to the pump mechanism side and supported by a bearing 116 in the front plate 111 and a bearing 118 in the rear plate 112 inside the pump mechanism part 102. Inside the pump mechanism, the rotor 107 is fixed to the shaft which serves to transmit torque generated at the DC motor 119 to the rotor 107.

In the above configuration, when the DC motor 119 is energized, the shaft 110 and the rotor 107 connected thereto rotate in the direction of the arrow in Fig. 1. At this time, the vane 109 moves outward in the groove 108 due to the centrifugal force generated by rotation of the rotor 107, and rotates while the tip end of the vane 109 contacts and slides on the inner surface 104 of the cylinder. As a result of this, the volume of the pump space 124 changes in accordance with expansion/reduction of the space volume (so called respiration) partitioned by the vane caused by rotation of the vane 109. In accordance with the change in volume of the pump space 124, air is sucked from the suction port 113 of the front plate 111, and part of the air directly enters the pump space 124.

The remainder of the air passes through a suction path 105 penetrating the cylinder 103 followed by the suction port 117 provided in the rear plate 112, and then sucked into the pump space 124.

The air having entered the pump space 124 is pushed downward from the suction port 113 toward the discharge port 114 by the vane 109 rotating in the direction of the arrow. After the pressure has elevated (ΔP = 2 to 5 kPa) during about a single rotation of the rotor 107, the air is discharged outside from the discharge opening 115 via the discharge port 114 on the front plate 111.

In the above configuration, the vane 109 is formed of a carbon composite material. Additionally, the cylinder 103 on which the tip end of the vane 109 contacts and slides is formed of aluminum alloy containing 10% of silicon. Furthermore, the slide surfaces of the front plate 111 and the rear plate 112 are coated with a self-lubricationmaterial containingmolybdenum disulfide, and the two plates 111 and 112 are disposed on the end surfaces of the cylinder 103 so as to sandwich the rotor 107 and the vane 109. With these structures, desirable compatibility is achieved on each sliding surface and friction loss and abrasion are reduced, so that oilless operation is enabled.

In addition, since the shaft 110 is configured by integrating the mechanical shaft of the rotor 107 and the motor shaft of the DC motor, the axial center of the pump mechanism part 102 can be easily aligned with the axial center of the motor part 119; thus, the whole pump 101 can be assembled with accuracy and simplicity. Furthermore, since a joint part is no longer required between the mechanical shaft and the motor shaft, downsizing is realized.

Due to the fact that sufficient pressurization is achieved with two vanes 109 in the case of an air supply unit of a fuel battery for mobile use which requires relatively small range of pressurization, and the fact that the groove 108 is offset from the central axis of the rotor 107, it is possible to largely reduce the diameter of the rotor 107. This is the reason for employing the above configuration. Furthermore, by providing the front plate 111 with the suction port 113 and the discharge opening 115 rather than providing the suction opening and the discharge opening in the periphery of the cylinder 103, it is possible to reduce the outer diameter of the pump mechanism part to equal to or less than 30 mm in diameter. Accordingly, the fuel battery can be downsized to such a size that is applicable to a mobile apparatus.

In this embodiment, materials containing molybdenum disulfide are employed as a self-lubrication coating material for the front plate 111 and the rear plate 112; however, materials containing PTFE may be alternatively used to reduce the friction and abrasion in a similar way.

In this embodiment, aluminum alloy is used as a material for the rotor 107; however, when PEEK-based resin is used in place of the aluminum alloy, it is possible to make the coefficient of linear expansion coincide with that of the aluminum alloy (cylinder 103) by modifying the composition of resin components. Therefore, it is possible to set the gap smaller and further reduce the weight while securing the performance of the air pump.

### (Embodiment 2)

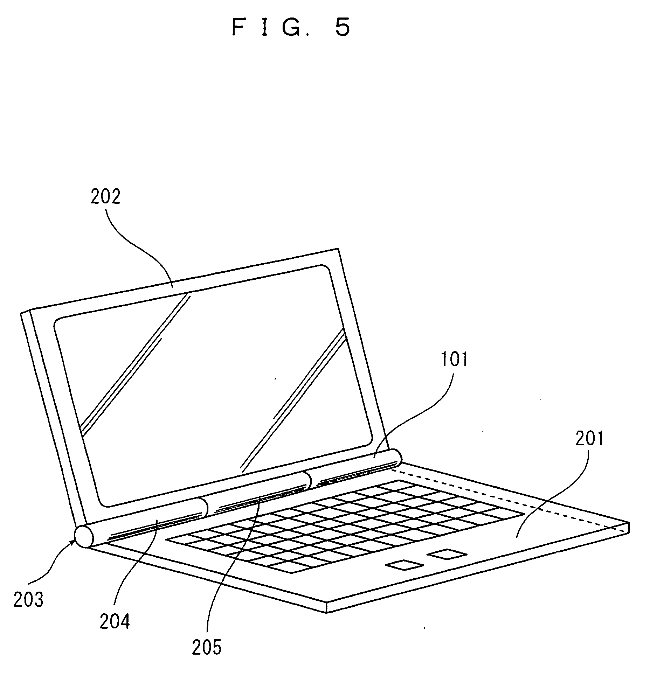

Fig. 5 is a perspective view of a vane rotary type air pump according to Embodiment 2 of the present invention incorporated in a personal computer. As shown in Fig. 2, in the vane pump type air pump, the outer circumference of the cylindrical surface of a pump mechanism part 102 is designed to have almost the same diameter with the outer circumference of a DC motor 119, to form a single cylindrical shape as a whole.

In Fig. 5, the personal computer includes a main body 201 and a LCD display 202 connected by a hinge part 203. Since this hinge part 203 has a cylindrical shape, first, a fuel part (methanol container) 204 of fuel battery and a main cell 205 of fuel battery are mounted in this hinge part. Then a vane rotary type air pump 101 of the present invention can also be readily accommodated in the hinge part 203 as an air pump that supplies the fuel battery cell 205 with air because it can be formed into a cylindrical shape as described above.

### (Embodiment 3)

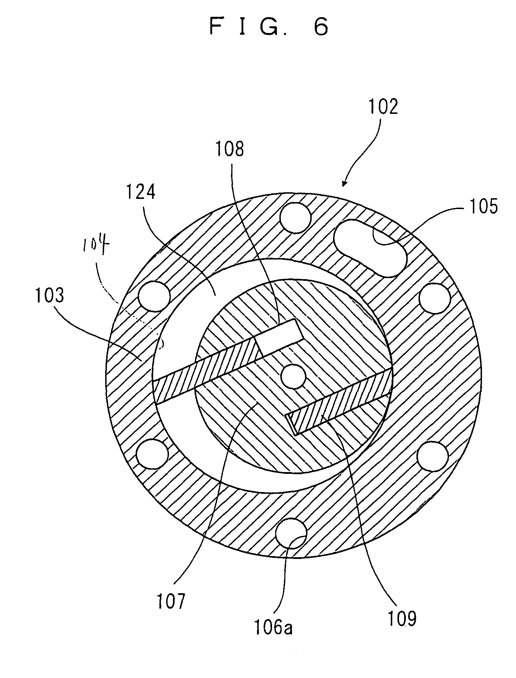

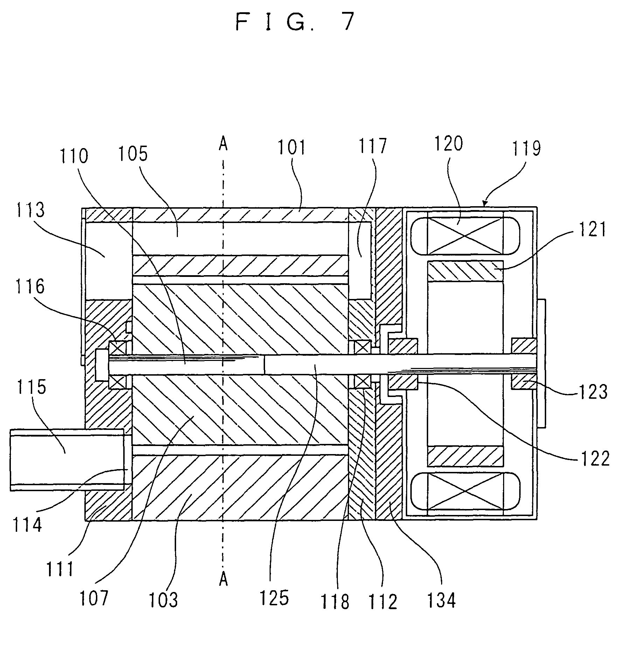

Figs. 6 and 7 are sectional views of a vane rotary type air pump according to Embodiment 3 of the present invention.

As shown in Fig. 6 and Fig. 7, in the vane rotary type air pump, a columnar rotor 107 is placed in a cylinder 103 having a cylindrical inner wall in the state where the columnar rotor 107 is decentered from a central axis of the cylinder space of the cylinder 103 in the same manner as described in Embodiment 1. The rotor 107 is provided with a plurality of (two in Fig. 1) grooves 108 in the direction of central axis that are offset from the central axis of the rotor 107. In these grooves 108, plate-like vanes 109 made of a material having a self-lubrication property are fitted in a slidable manner. A front plate 111 and a rear plate 112 provided with a self-lubrication material on the sliding surfaces are disposed on the end surfaces of the cylinder 103 so as to sandwich the rotor 107 and the vane 109, whereby a pump space 124 is formed. The central axis of the rotor 107 has a mechanical shaft 110, which is rotatably supported by the front plate 111 and the rear plate 112 and ball bearings 116 and 118 pressed into a plate 134 to constitute a pump mechanism part 102. Adjacent the pump mechanism part 102, a DC motor 119 is disposed via the rear plate 112 to constitute an oilless air pump.

In the DC motor 119, a coil 120 is disposed on the outer periphery of a rotor 121, and a motor shaft 125 is supported by a bearing 122 and a bearing 123. The bearing 122 is formed in a casing of the DC motor 119.

According this configuration, the rotor 121 rotates by a rotation torque generated by magnetic action between the rotor 121 and the coil 120. By rotatably supporting the motor shaft 125 formed integral with the rotor 121 by the bearing 122 and the bearing 123, the torque can be transmitted to the pump mechanism part 102.

The torque outputted from the DC motor 119 is transmitted to the rotor 107 connected with the motor shaft 125. Connection between the motor shaft 125 and the rotor 107 can be achieved by insertion of one end of the motor shaft 125, to which an adhesive is applied or by pressing-in or shrinkage fitting, into the through hole of the rotor 107. In this manner, the motor shaft 12 is coupled with the pump mechanism part 102.

As the rotor 107 to which torque is given rotates, the vane 109 projects outward in the radial direction along the groove 108 of the rotor 107 due to the centrifugal force and rotationally moves the pump space 124. The fluid sucked via the suction port 113 is compressed and discharged from the discharge opening 115 after passing through the discharge port 114.

As described above, in the conventional pump, the mechanical shaft 110 is formed integrally with the rotor 107 and, in order to drive the rotor 107 with the integrated DC motor 119, the motor shaft 125 of the DC motor 119 and the mechanical shaft 110 should be coupled with a coupling component. Therefore, the transmission efficiency is impaired as described above. To the contrary, according to this embodiment, the motor shaft 125 and the mechanical shaft 110 are connected by the rotor 107 serving as a coupling component. That is, since the motor shaft 125 and the mechanical shaft 110 are connected into the axial through hole of the rotor 107 by press fitting or shrinkage fitting or with an adhesive, it is possible to suppress deterioration of the transmission efficiency of torque to the pump mechanism part from the DC motor without necessity to conduct anti-slipping treatment such as I cut on the motor shaft 125.

The DC motor 119 and the pump mechanism part 101 are fastened with each other via the plate 134.

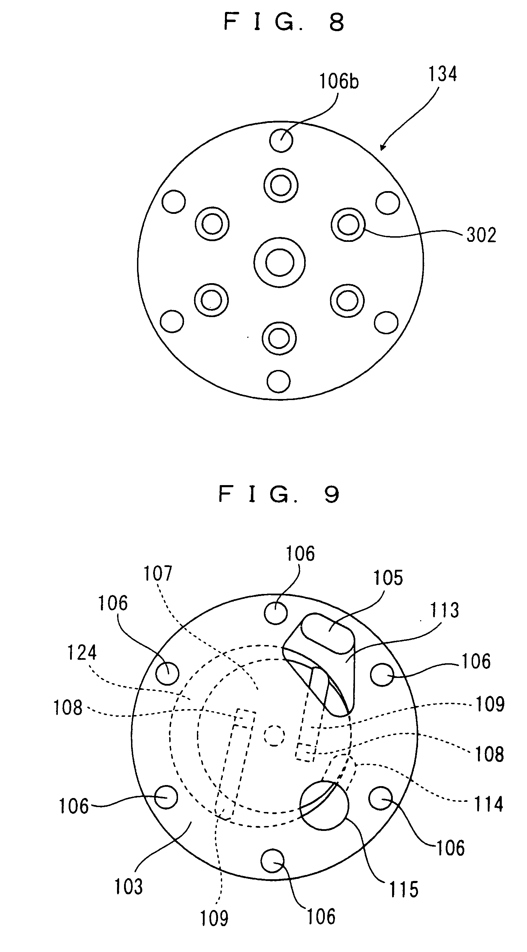

Fig. 8 shows a front view of the plate 134. In Fig. 8, the plate 134 is formed with an outer pump mechanism part fastening hole 106b which is designed to have the same pitch and the same diameter with a fastening hole 106a of pump mechanism part for fastening the DC motor 119 to the pump mechanism part 102, and an inner DC motor fastening hole 302 which is opened and spot faced to have the same pitch and same diameter with a fastening hole of the DC motor 119 (not shown) for fastening the DC motor 119.

According to the above configuration, a bolt is screwed into the DC motor fastening hole 302 on the inner circumference of the plate that is opened to have the same pitch and same diameter with the existent fastening hole formed in the motor casing, whereby the DC motor 119 is fastened to the plate 134. Owing to the spot facing, the bolt head will not project from the plate. Thereafter, a bolt is inserted into the pump mechanism part fastening hole 106a formed in the outer periphery of the plate to fasten it to the DC motor fastening hole 302, whereby the pump mechanism part is fastened to the plate 134. In this manner, the pump mechanism part 102 and the DC motor 119 are coupled with each other via the plate 134.

According to the present invention, it is possible to fasten the pump mechanism part 102 and the DC motor 119 regardless of the pitch and diameter of the existent screw hole formed on the end surface of the casing of the DC motor 119. Therefore, the pump mechanism part fastening hole 106a can be provided as close as possible to the outer circumference of the pump mechanism part 101 while ensuring the wall thickness of the cylinder 103 of the pump mechanism part 101, so that it is possible to increase the inner diameter of the cylinder 103. This in turn enables downsizing of the cylinder 103 in the radial direction, and makes it easy to downsize the pump mechanism part 101.

In Fig. 7, the vane rotary type air pump has the suction port 113 and the discharge port 114 and the discharge opening 115 in the front plate 111.

According to this configuration, the fluid sucked via the suction port 113 of the front plate 111 flows into the pump space 124, is compressed by the rotational movement of the vane 109, and then is discharged via the discharge opening 115 from the discharge port 114 of the front plate 111.

According to the present invention, since suction and discharge are permitted when the front plate 111 is exposed, it is not necessary to provide the discharge opening 115 in the outer periphery of the cylinder. Accordingly, it is possible to downsize the pump mechanism part 102 in the radial direction of the cylinder.

In Fig. 7, the suction path of the vane rotary type air pump communicates with the suction port 113 provided in the front plate 111, and a through hole 105 is provided in the wall of the cylinder 103 so as to be parallel with the mechanical shaft 110. In the rear plate 112 is provided a suction port 117 of recess shape with which the through hole 105 and the pump space 124 communicate. In a center part of the longitudinal direction of the through hole 105, a communication path (not shown) is provided that communicates from the through hole 105 to the pump space 124 in the radial direction.

According to this configuration, outside air is sucked via the suction port 113 provided in the front plate 111 upon rotation of the rotor 107 and flows into the pump room through two paths. The first path is a path that directly leads from the front plate 111 to the pump space 124. The second path is a path that passes the through hole 105 provided in the cylinder 103 from the suction port 113, passes suction port 117 provided in the rear plate 112 that communicates with the through hole 105 and finally leads to the pump space 124.

Furthermore, in addition to the first and the second paths, by providing a third suction path that passes a communication part formed in the radial direction of the through hole 105 from the suction port 113 and guides the outside air to the pump space 124 from the center part of longitudinal direction of the cylinder 103, it is possible to guide the outside air to the pump space 124 from three points: the front plate 111, the rear plate 112 and the cylinder 103.

As described above, in the conventional pump, since suction is carried out by only one path leading to the pump space 18 from the suction port 19 of the front plate 111, when the pump mechanism part is rotated at high speed, the time for suction process is reduced and suction amount of the fluid is shortened due to inertia force of the sucked fluid, to pose the problem that the suction efficiency is impaired.

According to the present invention, suction is enabled not only from the front plate 111 but also from the rear plate 112, so that it is possible to reduce the loss of suction pressure when the pump mechanism part rotates at high speed and to reduce the suction loss. In addition, suction from the center part in the longitudinal direction of the cylinder is also available, so that it is possible to further reduce the loss of suction pressure associated with increase in suction amount of fluid and to reduce the suction loss.

Fig. 9 is a front view of the front plate 111. In Fig. 9, the recess-shaped discharge port 114 is formed on the backside of the front plate 111 so as to oppose to the pump space 124 ranging from the rotation angle of the rotor 107 wherein the volume ratio exceeds about one to the rotation angle of the rotor 107 where the gap reaches about five times the minimum gap along the radial direction between the rotor 107 and the cylinder 103.

Herein the term "volume ratio" means the ratio between the maximum volume of the pump space 124 when the rotor 107 has completed suction and the volume with which the rotor 107 opposes to the discharge port 114.

The "minimum gap along the radial direction between the rotor 107 and the cylinder 103" means the gap on the right side in Fig. 9 where the rotor 107 and the cylinder 103 are illustrated as if they are in contact with each other. In Fig. 9, the rotor 107 and the cylinder 103 are illustrated as if they are in contact with each other; however, they actually have a slight gap. For example, assuming that the gap is about 10 µm, the discharge port 114 is formed on the backside of the front plate 111 so that the terminal end of the discharge port 114 is located at the point where the gap between the rotor 107 and the cylinder 103 becomes five times. If the discharge port 114 is too close to the minimum gap along the radial direction, air leakage occurs, whereas if it is too far, the air cannot be completely drained off. Therefore, it is preferred that the discharge port 114 is disposed at the position where the gap is about five times the minimum gap along the radial direction between the rotor 107 and the cylinder 103.

With this configuration, the vane 109 rotationally moves while entering/leaving the groove 108 in accordance with the rotation of the rotor 107. Even when discharge of fluid starts at the time when the vane 109 comes into opposite to the discharge opening 115, and the vane 109 further rotates from the position where it becomes no longer opposite to the discharge opening, the fluid can flow out via the discharge opening 115 from the recess position provided so as to oppose to the pump space 104. Furthermore, since a recess such as discharge port is not formed in the range of rotation angles of the rotor 107 where the gap is about 5 times or less of the minimum gap along the radial direction between the rotor 107 and the cylinder 103, it is possible to suppress leakage of the fluid from the discharge port 114 to the suction side of the pump space 104.

According to the present invention, since the fluid in the pump space 104 can be pushed out by the vane in almost all regions of the discharge part of the pump space 104, the discharge loss is reduced, and reduction of discharge amount can be avoided. Furthermore, since it is possible to prevent leakage to the suction part of the pump space 104 through the minimum gap along the radial direction, the suction loss is reduced, and reduction of suction amount can be avoided.

## Claims

1. A vane rotary type air pump comprising:
a pump mechanism of a vane rotary type using a self-lubrication material for an inner slide surface thereof; and
a motor for driving the pump mechanism,
wherein
a mechanical shaft of the pump mechanism and a motor shaft of the motor are integrally formed.

2. A vane rotary type air pump comprising:
a pump mechanism part including
a cylinder having a cylindrical inner surface;
a columnar rotor disposed in the cylinder with a central axis thereof being decentered by a predetermined amount from a central axis of a cylinder space of the cylinder, the rotor having a plurality of grooves in the direction of the central axis thereof;
a plate-like vane made of a material having a self-lubrication property and slidably fitted into the grooves;
a front plate and a rear plate having a self-lubrication material on slide surfaces thereof and disposed on end surfaces of the cylinder in such a manner that they sandwich the rotor and the vane to form a plurality of pump spaces; and
a mechanical shaft provided in the central axis of the rotor to form a pump mechanism part, and
a DC motor disposed adjacent to the pump mechanism part via the rear plate, said DC motor driving the mechanical shaft so that the pump spaces are caused to change in volume following rotational movement of the vane,
wherein
the mechanical shaft is integrally formed with a motor shaft of the DC motor.

3. The vane rotary type air pump according to claim 1, wherein the rotor has two grooves being offset from the central axis, the front plate has a suction opening and a discharge opening, the pump mechanism part is formed to have an outer diameter of not more than 30 mm, and the DC motor employs a brushless DC motor for implementation thereof, whereby an air supply unit is provided applicable to a fuel battery for mobile apparatus.

4. The vane rotary type air pump according to claim 2, wherein the cylindrical surface of the pump mechanism part and the DC motor have outer circumferences substantially equal to each other in diameter, thereby integrally forming a single cylinder as a whole, and such cylinder is provided in a hinge part of a personal computer.

5. The vane rotary type air pump according to any one of claims 1 to 3, wherein the vane is made of a carbon composite material, the rotor is formed using aluminum alloy or PEEK-based resin, the cylinder is formed using aluminum alloy containing approximately 10% of silicon, and the front plate and the rear plate are surface-coated with a self-lubrication material containing PTFE or molybdenum disulfide.

6. A vane rotary type air pump comprising:
a pump mechanism part including
a cylinder having a cylindrical inner wall;
a columnar rotor disposed in the cylinder in a decentered manner from a central axis of a cylinder space of the cylinder, the rotor having a plurality of grooves in the direction of a central axis thereof;
a plate-like vane made of a material having a self-lubrication property and slidably fitted into the groove;
a front plate and a rear plate having a self-lubrication material on slide surfaces thereof and disposed on end surfaces of the cylinder in such a manner that they sandwich the rotor and the vane to form a plurality of pump spaces; and
a mechanical shaft provided in the central axis of the rotor, and
a DC motor disposed adjacent to the pump mechanism part via the rear plate, the DC motor driving the mechanical shaft so that the pump spaces are caused to change in volume,
wherein
the mechanical shaft is jointed to a motor shaft of the DC motor via the rotor.

7. The vane rotary type air pump according to claim 5, wherein the motor shaft is joined with the rotor by press fitting or shrinkage fitting or using an adhesive.

8. The vane rotary type air pump according to claim 5, further comprising a plate having bolt holes and seats formed therearound and provided between the rear plate and the motor, the bolt holes and the seats each being formed to have the same pitch and diameter respectively corresponding to the pump mechanism part and the motor, thereby fastening the pump mechanism part and the motor via the plate.

9. The vane rotary type air pump according to claim 5, wherein the front plate has a suction port, a discharge port, and a discharge opening.

10. The vane rotary type air pump according to claim 8, further comprising a first suction path for guiding outside air into the pump space via the suction port formed in the front plate, and a second suction path for guiding outside air into the pump space from the suction port of the front plate via a through hole formed in the cylinder and a suction port formed in the rear plate to communicate with the through hole.

11. The vane rotary type air pump according to claim 9, further comprising a third suction path for guiding outside air into the pump space from the suction port via the through hole and a communication path leading from the through hole to the pump space, the communication path being formed at the central portion in the longitudinal direction of the through hole.

12. The vane rotary type air pump according to claim 8, wherein the front plate has a suction port and a recess-shaped discharge port respectively opposing the pump space lying over a range from a rotation angle of the rotor that has a volume ratio exceeding about 1 to a rotation angle of the rotor that has a gap of about five times a minimum gap along the radial direction between the rotor and the cylinder.
